Europäisches Patentamt

European Patent Office

Office européen des brevets

(19)

(11) Publication number: **0 095 312**
A1

# EUROPEAN PATENT APPLICATION

(12)

(21) Application number: **83302805.3**

(22) Date of filing: **17.05.83**

(51) Int. Cl.³: **B 05 D 3/10**
C 09 D 9/00, C 11 D 3/20

(30) Priority: **17.05.82 US 379108**

(43) Date of publication of application:
**30.11.83 Bulletin 83/48**

(84) Designated Contracting States:
**AT BE DE FR GB**

(71) Applicant: AMCHEM PRODUCTS, INC.
300 Brookside Avenue
Ambler Pennsylvania 19008(US)

(72) Inventor: Plante, Stuart E.
1979 Maplewood Avenue
Abington Pennsylvania(US)

(72) Inventor: Hess, Susan V.
1919 Sandy Hill Road, Apt. E-16
Norristown Pennsylvania(US)

(74) Representative: Sanderson, Laurence Andrew et al,
Sanderson & Co. 97 High Street
Colchester Essex C01 1TH(GB)

(54) Processes, compositions and concentrates for removal of sealants from surfaces.

(57) Processes for removing contaminating sealants used in the automobile and allied industries from water-insoluble surfaces, employing cleaning compositions which are aqueous solutions containing at least one $C_5$-$C_9$ alkanoic acid, normally at a concentration of at least 0.8 g/l and preferably 2.5 - 150 g/l, above all 8 - 60 g/l, as well as optionally other ingredients, notably at least 0.1 g/l and preferably 6 - 130 g/l of alkali metal phosphate or condensed phosphate.

Aqueous compositions for use in the processes may be prepared by dilution of 10% - 25% of aqueous concentrates, usually containing solubility-enhancing agents.

EP 0 095 312 A1

## PROCESSES, COMPOSITIONS AND CONCENTRATES
## FOR REMOVAL OF SEALANTS FROM SURFACES

This invention concerns processes for removing water-insoluble sealants from a water-insoluble surface contaminated therewith, and compositions and concentrates for use in said process.

In order to degrease and clean metal parts, and to protect them against corrosion, it is known to employ cleaning compositions which contain a salt (such as an alkanolamine salt) of a $C_6-C_{12}$ branched- or straight-chain aliphatic carboxylic acid as well as a non-ionic surfactant and a surface-active quaternary ammonium compound. Examples of such compositions are for instance disclosed in United States Patent No. 4,282,434. Amongst the many commercial uses for these compositions, they can be employed in automobile-assembly lines, where car-body parts and other metal automobile components must be cleaned so as to remove fine particles of metal (remaining from the metal-forming operations) and also the lubricating oils which are used during their manufacture and assembly.

The known use of these aliphatic carboxylic acid salts does not however solve one of the most difficult problems in cleaning automobile components. Prior to the metal-finishing steps which lead on to the application of paint to the car-body, it is necessary to remove the unwanted excess of the sealants commonly used to seal and water-proof many joints and like openings between the car-body parts and perhaps other metal components. Such sealants are usually applied to the joints by extruding them thereinto from grease guns; and it is commonplace to find that excess quantities of sealant get accidentally extruded or dripped onto adjacent portions of the metal components, from which any such excess must be removed before it is possible to commence the metal-finishing operations (e.g. application of a chemical-conversion coating) which precede painting. Such unwanted, excess sealants are at present rmeoved by kerosene (otherwise known as 'paraffin') which is the only practical, known method of removing such unwanted sealants. The use of kerosene however has many disadvantages. It is toxic to the workers using it, on prolonged exposure; it gives rise to flammability problems; it has an unpleasant odour; it is not as effective as is desirable, since heavy accumulations of sealant may require repeated applications of the kerosene because the sealant is not very readily soluble in the kerosene; and there is a problem in removing residues of kerosene from the metal components, because kerosene has a low water-solubility, and therefore cannot be readily removed by means of a water-rinse. The last factor is especially important, since when automobile bodies containing areas contaminated with kerosene are immersed successively in a bath of standard cleaning solution prior to the application of a chemical-conversion coating thereto, it has been found that quite rapidly the bath becomes contaminated and rendered ineffective by the kerosene — a problem which can be cured only by draining off the kerosene-contaminated bath and replacing it with a freshly made-up bath, which is expensive in terms not only of the bath make-up ingredients but also the "downtime" of the assembly line.

These disadvantages of the use of kerosene have had to be tolerated till now, since there has hitherto been no commercially-practical alternative method of removing contaminating sealants from metal components such as car-body parts.

We have however now found certain processes compositions and concentrates for removing contaminating sealants from metal or other water-insoluble surfaces, which are effective and which operate using sealant-removing compositions that do not contain kerosene or any other hydrocarbon solvent base.

According to one aspect of the present invention, there are provided processes for removing a water-insoluble sealant from a water-insoluble surface contaminated therewith, in which said surface is brought into contact with an aqueous solution comprising at least one $C_5-C_9$ alkanoic acid, said acid(s) being present in sufficient concentration to remove said sealant from said surface.

The sealants commonly used in the automobile-manufacturing and allied industries (such as the aviation industry, the manufacture of trucks and buses, and the manufacture of tractors and other motorized farm equipment) are necessarily water-insoluble compositions since their purpose and use as sealants is to seal and waterproof the joints and openings in which they are used, and they always (so far as we are aware) contain a resin such as an epoxy resin or a vinyl resin (e.g. polyvinyl chloride resin) and/or a heavy blending oil such as linseed oil, dioxylphthalein, diethylphthalein, dibutylphthalein, etc., as well as a fixotrope such as that sold under the tradename CARBOSIL, and a filler such as calcium carbonate or limestone.

Examples of sealants that can be removed by the processes and compositions of this invention are as follows:

- a polyvinyl chloride plastisol sealer, manufactured and sold by Union City Industries, Union City, Michigan, United States of America under the tradename GM 998-1263;

- a polyvinyl chloride plastisol sealer manufactured and sold by Hughes Chemical Co., Madison Heights, Michigan, United States of America under the tradename GM 998-1553;

- a red sealer having a linseed oil base, manufactured and sold by J.W. Mortell, Warren, Michigan, United States of America under the tradename GM 998-1301;

- a pink sealer used by the Ford Motor Company and designated M4G145C;

- a white sealer used by the Ford Motor Company and designated M4G161C; and

- a black sealer used by the General Motors Corporation and designated GM 998-1981.

The aqueous composition may be employed in the process at ambient temperature. The surface of the water-insoluble material, such as metal automobile components, which is contaminated with the water-insoluble sealant is contacted with the aqueous composition of the invention by any convenient method, such as by spraying or by immersion or by wiping with a sponge or brush or cloth soaked with the aqueous composition, or indeed by any combination of these methods. It is not necessary to remove any residue of excess composition which may remain upon the surface before advancing the treated component to the next stage in the automobile production line, namely treatment with the cleaning solution which precedes the chemical-conversion coating bath, since unlike kerosene the aqueous compositions of this invention will not significantly contaminate such a cleaning solution. We have in general found it best to bring the compositions into contact with the surface by means of a spray process, since then only small quantities of the aqueous composition of this invention are required; in such a case, the spray can be misted (i.e. sprayed in a fine mist) onto the water-insoluble surface under low pressure, e.g. 40-60 psi (pounds per square inch = about 2.81 - 4.22 kg per square cm.) followed usually by manual rubbing or automatic brushing.

The process of this invention finds its greatest potential use, at the present time, in the removal of resin-containing sealants from the surfaces of automobile body components.

According to another aspect of this invention there are also provided compositions, for use in the processes herein described for removing a water-insoluble sealant from a water-insoluble surface contaminated therewith, said compositions comprising water and at least one $C_5-C_9$ alkanoic acid dissolved therein at a concentration sufficient to remove unwanted sealant when said composition is applied to the water-insoluble surface contaminated therewith.

The alkanoic acid(s) employed in the composition may be any one or a mixture of more than one of the following, namely valeric acid (or n-pentanoic acid), isovaleric acid (or iso-pentanoic acid), 3-methyl- pentanoic acid, caproic acid (or n-hexanoic acid), enanthic acid (or n-heptanoic acid), caprylic acid (or n-octanoic acid), iso-octanoic acid, 4-ethyl-hexanoic acid, heptanoic acid, pelargonic acid (or n-nonanoic acid) and iso-nonanoic acid.

On balance we prefer that the alkanoic acid(s) employed should be or include iso-nonanoic acid. The compositions need only contain a sufficient concentration of the alkanoic acid(s) to remove the contaminating sealant from the surface when contacted therewith, but we have found that in general a concentration of at least about 0.8 gram per litre of the alkanoic acid(s) will be appropriate in order to achieve the desired effect. It is of course permissible to use higher concentrations of the alkanoic acid(s), indeed right up to the maximum solubility limit of the alkanoic acid (or combination of alkanoic acids) in the aqueous solution at room temperature - or indeed beyond that limit, if solubilizing agents for alkanoic acids are incorporated. However we have in general found that the concentration of alkanoic acid(s) should preferably be in the range of from about 2.5 grams to about 150 grams per litre, and above all in the range of from about 8 to about 60 grams per litre.

As indicated above, when the desired concentration of alkanoic acid(s) is greater than the solubility limit thereof in water at ambient temperature, then solubilizing agents for alkanoic acids should be incorporated in the compositions in order to maintain the alkanoic acid(s) in solution therein - as will be more fully described hereinafter, in relation to the concentrates of this invention.

The compositions of this invention may also advantageously contain a small amount of at least one surfactant. Thus a surfactant or a combination of two or more surfactants may be added to the composition, so as thus to enhance its cleaning effect, i.e. to facilitate the removal of workshop dirt, of lubricating and treating oils, of marks from highlight-marking pens and so on. We have in general found that surfactant when included in the compositions should normally be present in a concentration of at least about 0.1 g/l, and preferably within the range of from about 1 to about 50 g/l. Normally we prefer to employ low-foaming, non-ionic surfactants.

Examples of surfactants that have been found to be effective either alone or in combination, are as follows:

A surfactant, believed to be a polyoxyethylene-polyoxypropylene alcohol, sold by Olin Mathieson Company under the tradename POLY-TERGENT S-205LF.

A non-ionic surfactant, believed to be a modified polyoxylated straight-chain alcohol, sold by Rohm & Haas Co. under the tradename TRITON DF-16.

A non-ionic surfactant, believed to be a modified polyethoxylated straight-chain alcohol, sold by Olin Corporation under the tradename POLY-TERGENT S-505LF.

A non-ionic surfactant, believed to be an alkyl polyethoxylated ether, sold by Texaco Chemical Co. under the tradename SURFONIC LF-17.

A non-ionic surfactant, believed to be a modified oxyethylated straight-chain alcohol, sold by BASF Wyandotte Corporation under the tradename PLURAFAC RA-30.

A non-ionic surfactant, believed to be a modified oxyethylated straight-chain alcohol, sold by BASF Wyandotte Corporation under the tradename PLURAFAC D-25.

A non-ionic surfactant, believed to an an octyl phenoxy polyethoxy ethanol, sold by Rohm & Haas Company under the tradename TRITON X-102.

A non-ionic surfactant, believed to be composed of ethylene diamine containing about 30 moles of ethylene oxide and about 60 moles of propylene oxide, sold by American Hoechst Co. under the tradename GENAPOL PN-30.

A non-ionic surfactant, believed to be a coconut oil amine containing about 10 moles of ethylene oxide, sold by Armak Company under the tradename ETHOMEEN C/20.

A non-ionic surfactant, believed to be an alkyl poly(ethyleneoxy) ethanol, sold by GAF Corporation under the tradename ANTAROX BL 330.

A non-ionic surfactant, believed to be an alkylaryl polyether having a carbon chain of about 14 carbon atoms and approximately 16 moles of ethoxylation, sold by Rohm & Haas Company under the tradename TRITON CF-10.

A non-ionic surfactant, believed to be an ethoxylated abietic acid derivative with approximately 15 moles of ethoxylation, sold by Hercules Inc. under the tradename SURFACTANT AR 150.

A non-ionic surfactant, believed to be a condensate containing only ethylene oxide and propylene oxide chains, sold by BASF Wyandotte, Inc. under the tradename PLURONIC L061.

A non-ionic surfactant, believed to be an alkyl poly(ethyleneoxy) ethanol, sold by GAF Corporation under the tradename ANTAROX LF-330.

A non-ionic surfactant, believed to be an abietic acid ester containing approximately 14 to 16 moles of ethoxylation, sold by Glyco Chemicals, Inc. under the tradename PEGOSPERSE 700-TO.

A non-ionic surfactant, believed to be an alkyl phenoxy poly(ethyleneoxy) ethanol, sold by GAF Corporation under the tradename IGEPAL CA-630.

A non-ionic surfactant, believed to be an alkyl poly ether, sold by Emery Industries, Inc. under the tradename TRYCOL LF-1.

A non-ionic surfactant, believed to be polyoxyethylene esters of mixed fatty acids and resin acids, sold by I.C.I. United States, Inc. under the tradename RENEX 20.

An anionic surfactant, believed to be sodium 2-butoxyethoxyacetate, sold by Miranol Company under the tradename MIRAWET B.

A non-ionic surfactant, believed to be an alkyl polyethoxylated ether, sold by Texaco Chemical Company under the tradename SURFONIC LF-7.

An anionic surfactant, believed to be sodium 2-ethyl hexyl sulphate, sold by Union Carbide Corporation under the tradename TERGITOL ANIONIC-08.

We have also found that it is highly advantageous to incorporate at least one alkali metal phosphate or condensed phosphate salt in the aqueous sealant-removing compositions of this invention, whose presence can markedly enhance the effectiveness of the composition. The inclusion of the phosphate or condensed phosphate salt also serves significantly to enhance the solubility of the $C_5$-$C_9$ alkanoic acid in the compositions, thus facilitating the preparation of homogeneous concentrates, suitable for storage and transportation, and which can be diluted by the end-user just prior to use.

The alkali metal phosphate and condensed phosphate salts which can be employed in the compositions of this invention, either alone or in combination, include those having a sodium, potassium or caesium cation, and a phosphate, tripolyphosphate, pyro-phosphate or metaphosphate anion. The preferred such salts, for use either alone or in combination with each other, are trisodium phosphate and potassium tripolyphosphate.

The alkali metal phosphate or condensed phosphate salt(s) when included will preferably be present in a concentration of at least about 0.1 grams/litre, and preferably within the range of from about 6 to about 130 grams/litre of solution.

The aqueous sealant-removing compositions of this invention may also contain various other optional but desirable ingredients. It is in particular often desirable that the compositions should also contain at least one of the following:

(a)   an alkali metal silicate; and/or

(b)   an alkali metal borate; and/or

(c)   a solubilizing agent for alkanoic acid(s), said solubilizing agent being one or a mixture of more than one of the following, namely alkali metal hydroxides, $C_1$-$C_3$ alkanols, $C_2$-$C_3$ glycols and emulsifying agents; and/or

(d)   a phosphonic or sulphonic acid; and/or

(e)   a biocidal agent.

The alkali metal silicate may be added to enhance the sealant-removing activity of the compositions; and when included the silicate will preferably be present in a concentration of at least about 0.1 gram per litre, and preferably in the range of from about 6 to about 130 grams per litre, of an alkali metal silicate, e.g. sodium silicate, potassium metasilicate, etc.

Also to enhance the sealant-removing activity of the compositions, they may advantageously contain an alkali metal borate or condensed borate; and when present such borate(s) will preferably be present in a concentration within the range of from about 0.1 to about 125 grams per litre, of an alkali metal borate or condensed borate, e.g. sodium borate, potassium fluoborate, etc.

In order to increase the solubility in the compositions of the alkanoic acid(s), and especially so as to enable concentrates thereof to be prepared which are suitable for storage and transporation, the compositions will also very desirably include one or more solubilizing agents for alkanoic acids.

Examples of such solubilizing agents are alkali metal hydroxide(s) and/or amines such as ammonia and alkanolamines, e.g. mono-, di- or triethanolamine, propanolamine, etc. The alkali metal hydroxide(s) may suitably be present in a concentration within the range of from about 5 to about 200 grams per litre. It may be noted that the alkanolamines will also serve to provide a rust-protection activity.

Other such solubilizing agents include $C_1-C_3$ alkanols or a $C_2-C_3$ glycols, e.g. ethanol, propanol, ethylene glycol, propylene glycol, etc., which may be incorporated in sufficient amount to solubilize the $C_5-C_9$ alkanoic acid in the solution.

Still other such solubilizing agents include emulsifiers, foremost amongst which are sulphonic and phosphonic acids and their salts, which not only will act to enhance the solubility of the alkanoic acids in the compositions but will also emulsify any oils present on the surfaces to be cleaned therewith. Suitable such acids include alkyl, aryl, or aralkyl sulphonic or phosphonic acids, or indeed acyl phosphonic acids. When an alkyl sulphonic or phosphonic acid is used herein, the alkyl group can be a straight- or branched-chain alkyl group, preferably having from 1 to 24 carbon atoms. Aryl sulphonic or phosphonic acids can be alkylsubstituted or unsubstituted phenyl or naphthyl groups, such as phenyl, tolyl, xylyl, dodecylphenyl, etc. wherein the alkyl groups preferably have from 1 to 24 carbon atoms. Aralkyl sulphonic or phosphonic acids include those wherein the aralkyl group is preferably phenylalkyl or naphthylalkyl, with the alkyl group preferably having from 1 to 24 carbon atoms, such as benzyl, phenylethyl, etc. Acyl phosphonic acids can be those wherein the acyl group is an alkanoyl group, preferably having from 2 to 24 carbon atoms, such as aceto, propanoyl, etc. Examples of particularly useful compounds include acetophosphonic acid and p-dodecylbenzene sulphonic acid. All these sulphonic and/or phosphonic acids can if desired be employed in the form of their salts, e.g. as an alkali metal salt. When such sulphonic or phosphonic acids or salts thereof are incorporated, they will preferably be present in a concentration of at least about 0.1 gram per litre, and preferably in the range of from about 6 to about 130 grams per litre.

In order to prevent contamination of the compositions with bacteria or fungi, they can also desirably incorporate a biocide, conveniently a hexahydrotriazine derivative, a phenol or a chlorophenol, or a quaternary ammonium compound such as an alkyl dimethyl benzyl ammonium chloride, etc., usually in a concentration within the range of from about 0.1 to about 150 g/l.

Still other optional additives may be thought desirable such as:

- small quantities of a thickening agent, e.g. hydroxyethyl-cellulose, to increase the viscosity of the composition;

- small quantities of a water-soluble dye or dyes, to assist in rapid identification of the composition; and

- small quantities of perfumes, e.g. lemon oil, to mask or improve the odour of the composition.

In yet another aspect, this invention also provides aqueous concentrates, for dilution appropriately with water to form the compositions herein disclosed, said concentrates consisting essentially of water and at least one $C_5-C_9$ alkanoic acid in a concentration of at least 8 grams per litre.

Such concentrates areso formulated that upon dilution with some suitable, predetermined quantity of water they will form the normal-strength aqueous compositions best used in the process.

We have found that is it convenient to dilute such concentrate so that the normal-strength aqueous compositions represent a solution of from 10% to 25% of the concentrate in water. The 8 g/l of alkanoic acid(s) lower limit in the concentrate thus represents the minimum level at which dilution of the concentrate to 10% in water will yield the recommended minimum concentration of alkanoic acid(s) in the normal-strength working compositions.

Upon a similar basis, it is preferred that the concentrates of this invention should contain a concentration of alkanoic acid(s) of 25 g/l or more, and above all in the range of from 80 to 600 g/l.

Since the $C_5-C_9$ alkanoic acids have limited water solubility, the concentrates of the invention will desirably or even necessarily include a solubility-enhancing agent, e.g. an amine and/or an alkali metal hydroxide and/or an emulsifying agent and/or an alcohol or glycol.

In order that the invention shall be well understood it will now be further described, though by way of illustration only, with reference to the following examples:

EXAMPLES I - IV

The following alkanoic acids were dissolved in deionized water at room temperature, to form compositions wherein they were present in the concentrations indicated below:

| Example | Alkanoic Acid | Concentration |
|---------|---------------|---------------|
| I | Valeric acid | 0.8 g/l |
| II | Caproic acid | 0.8 g/l |
| III | Caprylic acid | 0.8 g/l |
| IV | Isononanoic acid | 0.8 g/l |

These various compositions were tested by dipping rags in the respective compositions, and then using a fresh wet rag in each test to wipe the surfaces of steel sheets each bearing a coating (of about 1-3 mm thickness) of one of the following sealants:

(a) A polyvinyl chloride plastisol sealant, of grey colour, manufactured by Union City Industries, of Union City, Michigan, United States of America, known as GM 998-1263.

(b) Another polyvinyl chloride plastisol sealant, also of grey colour, manufactured by Hughes Chemical Co., of Madison Heights, Michigan, United States of America, known as GM 998-1553

(c)  A sealant based upon linseed oil, of red colour, manufactured by J.W. Mortell, of Warren, Michigan, United States of America, known as GM 998-1301

In this way we found that all the compositions of Examples I, II, III, and IV were effective in removing each of the above sealants from the steel sheets.

For purposes of comparison, the same test was performed using however different alkanoic acids (in each case at the same concentration of 0.8 g/l) outside the scope of this invention, namely glycolic acid, benzoic acid, acetic acid, myristic acid, malonic acid, capric acid, lauric acid, gluconic acid, 1,2,3-propanetricarboxylic acid, phthalic acid, sebacic acid, maleic acid, and propanoic acid - and in no case were these comparitive solutions found to be effective against all three of the above-listed sealants.

## EXAMPLE V

The following ingredients were dissolved in deionized water at room temperature, to form a composition wherein they were present in the concentrations indicated below:

| Ingredient | Concentration |
|---|---|
| Isononanoic acid | 22.7 g/1 |
| Surfactant - believed to be a polyoxyethylene-polyoxypropylene alcohol sold by Olin Mathieson Company under the tradename "Poly-Tergent" S-205LF | 8.3 g/1 |

This composition was tested by dipping rags thereinto, and then using the rags thus wetted to wipe a steel plate coated with one of the following sealants:

(a)  A sealant, of unknown composition and black in colour, used by General Motors Corporation, and known as GM 998-1981.

(b)  The red sealant, known as GM 998-1301, as used in Examples I - IV.

In each instance the composition rapidly removed the sealant from the surface of the steel plate.

EXAMPLE VI

The following ingredients were dissolved in deionized water at room temperature, to form a composition wherein they were present in the concentrations indicated below:

| Ingredient | Concentration |
|---|---|
| Isononanoic acid | 10.4 g/1 |
| Trisodium phophate | 25.4 g/1 |

This composition was then applied by means of wet rags to four steel sheets each respectively coated with one of the sealants identified in Examples I-IV above.

In each instance, the sealant was rapidly and effectively removed from the sheet by one wipe of the wet rag.

## EXAMPLES VII - VIII

The following ingredients were dissolved in deionized water at room temperature, to form compositions wherein they were respectively present in the concentrations indicated below:

| Example | Ingredient | Concentration |
|---------|-----------|---------------|
| VII | Isononanoic acid | 10.4 g/l |
| | Potassium tripolyphosphate | 54.6 g/l |
| | A non-ionic surfactant - believed to be a coconut oil amine containing about 10 moles of ethylene oxide, sold by Armak Co. under the tradename "Ethomeen" C/20 ................... | 4.6 g/l |
| VIII | Isononanoic acid | 10.4 g/l |
| | Potassium tripolyphosphate | 25.4 g/l |
| | Another non-ionic surfactant - believed to be composed of ethylene diamine containing about 30 moles of ethylene oxide and about 60 moles of propylene oxide, sold by American Hoechst Co. under the tradename "Genapol" PN-30 ................... | 4.6 g/l |

Both these compositions were tested, using the test procedure described in Example I, against the black sealant known as GM 998-1981 and the red sealant known as GM 998-1301, both as already used in Example V; and it was found that in each instance the compositions under test removed each sealant rapidly and thoroughly with one wipe.

## EXAMPLE IX

The following ingredients were mixed together to form a concentrated aqueous composition wherein they were present in the concentrations indicated below:

| Ingredient | Concentration |
| --- | --- |
| Triethanolamine (85% active) | 103.0 g/l |
| Monoethanolamine | 51.5 g/l |
| Isononanoic acid | 113.3 g/l |
| 1,3,5-tris-ß-hydroxyethyl-<br>hexahydro-S-triazine | 60.8 g/l |
| n-alkyl dimethyl benzyl<br>ammonium chloride (80% solution) | 3.9 g/l |
| Surfactant - believed to be a<br>polyoxyethylene - polyoxypropylene alcohol,<br>sold by Olin Mathieson Company under the<br>tradename "Poly-Tergent" S-205LF ............ | 41.2 g/l |
| Deionized Water | q.s. |

This concentrate was first tested at full-strength, by dipping a cloth rag into the solution at ambient temperature, and using the rag thus soaked with the solution to wipe the surfaces of automobile bodies bearing an excess of the sealants known as GM 998-1263 and GM 998-1553 (both as already used in Examples I - IV) upon parts of those bodies. In each instance the excess sealant was removed with one wipe of the rag.

0095312

A diluted solution was then prepared, by diluting the full-strength concentrate with tap water to a 15% concentration; and the diluted solution was tested by spraying it in mist-form onto car bodies bearing the same excess sealants as above, using a spray nozzle and about 50 psi (pounds per square inch = about 3.52 kg/sq.cm.) pressure. Clean cloth rags were then used to wipe the bodies; and it was found in each instance that the excess sealants were removed by one wipe. .

EXAMPLE X

The following ingredients were mixed together to form a concentrated aqueous composition wherein they were present in the concentrations indicated below:

| Ingredient | Concentration |
|---|---|
| Triethanolamine (85% active) | 103.0 g/l |
| Monoethanolamine | 51.5 g/l |
| Isononanoic acid | 113.3 g/l |
| Surfactant - believed to be a polyoxyethylene-polyoxypropylene alcohol, sold by Olin Mathieson Company under the tradename "Poly-Tergent" S-205LF ...... | 41.2 g/l |
| Deionized water | q.s. |

This concentrate was first tested at full-strength, by dipping a cloth rag into it at ambient temperature, and using the rag thus soaked with the concentrate to wipe the surfaces of automobile bodies bearing an excess of the sealants known as GM998-1263 and GM998-1553 (both as already used in Examples I-IV) upon parts of the bodies; and it was found in each instance that the excess sealant was removed with one wipe of the rag.

A diluted solution was then prepared, by diluting the full-strength concentrate with tap water to a 15% concentration; and the diluted solution was tested by spraying in mist-form onto car bodies bearing the same excess sealants as above, using a spray nozzle and about 50 psi (pounds per square inch = about 3.52 kg/sq.cm.) pressure. Clean cloth rags were then used to wipe the bodies; and it was found in each instance that the excess sealants were removed by one wipe.

### EXAMPLE XI

The following ingredients were mixed together to form a concentrated aqueous composition wherein they were present in the concentrations indicated below:

| Ingredient | Concentration |
|---|---|
| Triethanolamine (85% active) | 154.5 g/l |
| Isononanoic acid | 113.3 g/l |
| Surfactant - believed to be a polyoxyethylene - polyoxypropylene alcohol, sold by Olin Mathieson Company under the tradename "Poly-Tergent" S-205LF ........ | 41.2 g/l |
| Deionized water | q.s. |

This concentrate was first tested at full-strength, by dipping a cloth rag into it at ambient temperature, and using the rag thus soaked with the concentrate to wipe the surfaces of automobile bodies bearing an excess of the sealants GM998-1263 and GM988-1553 (both as already used in Examples I - IV) upon parts of those bodies. In each instance the excess sealant was removed with one wipe of the rag.

A diluted solution was then prepared by diluting the full-strength concentrate with tap water to a 15% concentration; and the diluted solution was tested by spraying in mist-form onto car bodies bearing the same excess sealants as above, using a spray nozzle and about 50 psi (pounds per square inch = about 3.52 kg per square cm.) pressure. Clean cloth rags were then used to wipe the bodies; and it was found in each instance that the excess sealants were removed by one wipe.

CLAIMS

1. Processes for removing a water-insoluble sealant from a water-insoluble surface contaminated therewith, in which said surface is brought into contact with an aqueous composition comprising at least one $C_5$-$C_9$ alkanoic acid, said acid(s) being present in sufficient concentration to remove said sealant from said surface.

2. A process as claimed in claim 1, in which the aqueous composition is brought into contact with said surface by spraying thereon.

3. A process as claimed in claim 1 or claim 2, in which the alkanoic acid(s) employed is or include iso-nonanoic acid.

4. A process as claimed in any of the preceding claims, in which the aqueous composition employed contains a concentration of the alkanoic acid(s) of at least about 0.8 grams per litre, preferably in the range of from about 2.5 to about 150 grams per litre, and above all in the range of from about 8 to about 60 grams per litre.

5. A process as claimed in any of the preceding claims, in which the composition also contains at least one surfactant in a concentration of at least 0.1 g/l, preferably in the range of from 1 to 50 g/l.

6. A process as claimed in any of the preceding claims, in which the composition also contains at least one alkali metal phosphate or condensed phosphate salt, said salt(s) being present in a concentration of at least about 0.1 grams per litre, and preferably within the range of from about 6 to about 130 grams per litre.

7. A process as claimed in any of the preceding claims, in which the compositions also contains at least one of the following:

(a) an alkali metal silicate; and/or

(b) an alkali metal borate; and/or

(c) a solubilizing agent for alkanoic acid(s), said solubilizing agent being one or a mixture of more than one of the following, namely alkali metal hydroxides, $C_1$-$C_3$ alkanols, $C_2$-$C_3$ glycols and emulsifying agents; and/or

(d) A phosphonic or sulphonic acid; and/or

(e) a biocidal agent.

8. Processes for removing a water-insoluble sealant from a water-insoluble surface contaminated therewith, as claimed in any of the preceding claims and substantially as herein described.

9. Metallic components from which excess water-insoluble sealants have been removed by the process claimed in any of claims 1 to 8.

10. Compositions, for use in the processes claimed in any of claims 1 to 8 for removing a water-insoluble sealant from a water-insoluble surface contaminated therewith, said compositions comprising water and at least one $C_5-C_9$ alkanoic acid dissolved therein at a concentration sufficient to remove unwanted sealant when said composition is applied to the water-insoluble surface contaminated therewith, and being otherwise as defined in any of the foregoing claims 1 to 9.

11. Aqueous concentrates, for dilution appropriately with water to form the compositions claimed in claim 10, said concentrates comprising water and dissolved therein, if necessary with the aid of a solubility-enhancing agent, at least one $C_5-C_9$ alkanoic acid in a concentration of at least about 8 grams per litre, together optionally with other ingredients as specified in any of claims 1 to 8 at concentrations of at least 10 times those (if any) herein specified.

12. An aqueous concentrate as claimed in claim 11, in which the concentration of alkanoic acid(s) is at least 25 grams per litre.

13. An aqueous concentrate as claimed in claim 11 or 12, in which the concentration of alkanoic acid(s) is within the range of from 80 to 600 grams per litre.

European Patent
Office

**0 0 9 5 3 1 2**
Application number

**EUROPEAN SEARCH REPORT**

EP  83 30 2805

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | GB-A-1 143 976  (FARBWERKE HOECHST)<br>*  Claims; page 1, line 61 - page 2, line 1 * | 1,3,4, 7,9 | B 05 D    3/10<br>C 09 D    9/00<br>C 11 D    3/20 |
| Y | GB-A-1 066 407  (UNILEVER)<br><br>* Claims 1,2,4-6,8; page 1, lines 39-67 * | 1,2,4, 5,7-13 | |
| A | US-A-3 216 945  (A. MANKOWICH) | | |

|  |  |
|---|---|
| | TECHNICAL FIELDS SEARCHED (Int. Cl. ³) |
| | B 05 D    3/10<br>B 05 D    7/14<br>B 05 D    7/16<br>C 11 D    3/20<br>C 11 D    7/26<br>C 23 G    1/00<br>C 23 F    7/08 |

The present search report has been drawn up for all claims

| Place of search | Date of completion of the search | Examiner |
|---|---|---|
| THE HAGUE | 29-07-1983 | TORFS F.M.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82